# EUROPÄISCHE PATENTSCHRIFT

(11) **EP 2 325 708 B1**
(45) Veröffentlichungstag und Bekanntmachung des Hinweises auf die Patenterteilung: **12.02.2014**
(21) Anmeldenummer: 10191383.8
(22) Anmeldetag: 16.11.2010
(51) Int. Cl.: G05B 19/042

(54) **Echtzeit-Laufzeitsystem und Funktionsmodul für ein solches Laufzeitsystem**
Real-time run-time system and functional module for such a run-time system
Système de temps de transit en temps réel et module fonctionnel pour un tel système de temps de transit

(30) Priorität: 23.11.2009 DE 102009047025
(43) Veröffentlichungstag der Anmeldung: 25.05.2011
(73) Patentinhaber: Beckhoff Automation GmbH, 33415 Verl (DE)
(72) Erfinder: Janssen, Dirk, 33415, Verl (DE); Lümkemann, Jan, 33415 Verl (DE); Hoppe, Gerd, 33378, Rheda-Wiedenbrück (DE)
(74) Vertreter: Patentanwaltskanzlei WILHELM & BECK

(56) Entgegenhaltungen:
- EP-A2- 1 182 529
- WO-A2-2006/029994
- DE-A1- 10 065 418
- DE-A1- 10 065 419
- DE-A1- 10 155 586

## Beschreibung

Die Erfindung betrifft ein Laufzeitsystem für eine Datenverarbeitungsanlage zur Echtzeitausführung eines Anlagensteuerprogramms auf der Grundlage einer Steuerprogrammbeschreibung und ein Funktionsmodul zur Verwendung in einem solchen Laufzeitsystem.

In der Industrieautomation werden speicherprogrammierbare und numerische Steuerungen (SPS/NC) zunehmend in Software auf einer leistungsfähigen Standard-Hardware, z. B. einem Industrie-PC, ausgeführt. Im Gegensatz zu konventionellen SPS/NC, die auf einer eigenständigen Rechenbaugruppe ausgeführt werden, laufen sogenannte Soft-SPS/NC unter dem Wirtsbetriebssystem der Datenverarbeitungsanlage, z. B. unter Windows oder Unix. Das Wirtsbetriebssystem wird hierzu um einen Echtzeitkernel erweitert, der auch von der Soft-SPS/NC zur Verfügung gestellt werden kann und der die Rechenzeit, die das Wirtsbetriebssystem an die SPS/NC abgibt, steuert.

Der Vorteil im Vergleich zu konventionellen SPS/NC ist bei der Soft-SPS/NC die weitgehende Unabhängigkeit von der verwendeten Hardware. Die Hardware lässt sich damit im Bedarfsfall ohne Weiteres austauschen bzw. durch leistungsfähigere Hardware ersetzen. Soft-SPS/NC profitieren so automatisch vom ständigen Leistungszuwachs der Hardware. Zudem macht die Soft-SPS/NC den Anwender in der Regel auch unabhängig vom Hardware-Anbieter. Außerdem lassen sich bei der Soft-SPS/NC Änderungen des zu steuernden Prozesses einfacher als bei konventionellen SPS/NC umsetzen. Bei der konventionellen SPS/NC ist üblicherweise ein spezielles Programmiergerät erforderlich, um die Elemente der SPS/NC zu programmieren. Oftmals ist die SPS/NC auch auf mehrere Rechner in einer Rechnerbaugruppe verteilt, wobei die Elemente der SPS/NC oft auch mit unterschiedlichen Programmiersprachen erzeugt werden und so dann auch unterschiedliche Konfigurationswerkzeuge erfordern. Bei der Soft-SPS/NC kann sich das Konfigurationswerkzeug dagegen auch auf derselben Hardware befinden wie die Steuerungssoftware.

Um den Aufwand bei der Programmierung von konventionellen und Soft-SPS/NC-Lösungen zur Steuerung oder Regelung komplexer Maschinen und Anlagen zu reduzieren, werden zunehmend modulare Konzepte eingesetzt. Einzelne Maschinenaggregate oder Anlagenbaugruppen bzw. Funktionalitäten werden als eigenständige Module betrachtet, für die jeweils eine nach außen gekapselte Steuerungssoftware erstellt wird. Die einzelnen Programmteile können dabei mit unterschiedlichen Entwicklungswerkzeugen bzw. Programmiersprachen erstellt werden, wobei der Quelltext dann von einem zugehörigen Compiler in einen ausführbaren Programmcode übersetzt wird. Diese ausführbaren Programmmodule bilden zusammen das Anlagensteuerprogramm. Alle Programmmodule werden beim Start von einer zusätzlich vorgesehenen Softwareumgebung im Laufzeitsystem zur Echtzeitausführung des Anlagensteuerprogramms geladen und ausgeführt. Die einzelnen Programmmodule weisen dabei eine definierte Schnittstelle zur Kommunikation untereinander und mit der Softwareumgebung auf.

Der modulare Aufbau der SPS/NC macht es möglich, die einzelnen Module getrennt zu entwickeln und dabei jeweils die am besten dafür geeignete Programmiersprache bzw. das hierfür erforderliche Entwicklungswerkzeug einzusetzen. Auch besteht so die Möglichkeit, auf standardisierte Elemente zurückzugreifen. Als Entwicklungswerkzeuge für eine Logiksteuerung werden z. B. Hochsprachen, bei Regelungsprozessen z. B. Bodediagramme oder Modellregler eingesetzt. Die einzelnen Programmmodule werden jedoch mit einem eigenen Computer in ein lauffähiges Programm umgesetzt, das im Rahmen der SPS/NC statisch und nicht veränderbar ist. Alle Programmmodule müssen beim Hochfahren der SPS/NC bereits in ausführbarer Form vorliegen. Die getrennte Ausführung der Programmmodule macht es darüber hinaus erforderlich, dass der Datenaustausch zwischen den Programmmodulen korrekt erfolgt und hierbei muss insbesondere zuverlässig garantiert werden, dass die verwendeten Datentypen miteinander kompatibel sind. Da die einzelnen Programmmodule vollständig voneinander getrennt sind, muss der Datenaustausch dabei zwingend über Schnittstellen erfolgen. Ferner ist zum gemeinsamen Verbinden der Programmmodule ein sogenannter Linker erforderlich, der die Programmmodule zu einem gemeinsamen Programm zusammenstellt. Dieser Linker sorgt dafür, dass, wenn ein Programmmodul ein anderes Programmmodul verwendet, die Adressen der Funktionen und Variablen des Moduls in Speicheradressen umgewandelt werden.

Laufzeitsysteme sind in der EP 1 182 529 A2, der DE 100 65 419 A1 und der DE 100 65 418 A1 beschrieben.

Aufgabe der Erfindung ist es, ein Laufzeitsystem für eine Datenverarbeitungsanlage zur Echtzeitausführung eines Maschinenprogramms auf der Grundlage einer Steuerprogrammbeschreibung und ein Funktionsmodul zur Verwendung in einem solchen Laufzeitsystem zur Verfügung zu stellen, die offener, flexibler und leichter erweiterbar sind.

Die Aufgabe wird durch ein Laufzeitsystem gemäß Anspruch 1 und ein Funktionsmodul gemäß Anspruch 10 gelöst. Bevorzugte Weiterbildungen sind in den abhängigen Ansprüchen angegeben.

Erfindungsgemäß weist ein Laufzeitsystem für eine Datenverarbeitungsanlage zur Echtzeitausführung eines Anlagensteuerprogramms auf der Grundlage einer Steuerprogrammbeschreibung eine Mehrzahl von Funktionsmodulen auf. Jedes Funktionsmodul umfasst eine Zustandsmaschine, die die Zustände Initialisierung, Vorbetrieb, Prüfbetrieb und Echtzeitbetrieb und Zustandsübergänge zwischen Initialisierung und Vorbetrieb, zwischen Vorbetrieb und Prüfbetrieb und zwischen Prüfbetrieb und Echtzeitbetrieb umfasst, wobei die Zustände Initialisierung, Vorbetrieb und Prüfbetrieb und der Zustandsübergang zwischen Initialisierung und Vorbetrieb und der Zustandsübergang zwischen Vorbetrieb und Prüfbetrieb einem Nicht-Echtzeitkontext und der Zustand Echtzeitbetrieb und der Zustandsübergang zwischen Prüfbetrieb und Echtzeitbetrieb einem Echtzeitkontext zugeordnet sind, eine Modulbeschreibung, die Moduleigenschaften und eine eindeutige Modulkennung enthält, und eine Funktionsmodul-Schnittstelle zum Zugriff auf die Zustandsmaschine und die Modulbeschreibung.

Ferner ist im Laufzeitsystem erfindungsgemäß ein Verwaltungsmodul vorgesehen, das eine Verwaltungsmodul-Schnittstelle umfasst und die Funktionsmodule auf der Grundlage der Steuerprogrammbeschreibung verwaltet. Die Funktionsmodule sind dabei ausgelegt, sich am Verwaltungsmodul beim Zustandsübergang von Initialisierung zum Vorbetrieb mit ihrer Modulkennung anzumelden und beim Zustandsübergang vom Vorbetrieb zur Initialisierung abzumelden, zu weiteren Funktionsmodulen über das Verwaltungsmodul beim Zustandsübergang vom Vorbetrieb zum Prüfbetrieb Kommunikationsverbindungen aufzubauen und beim Zustandsübergang vom Prüfbetrieb zum Vorbetrieb Kommunikationsverbindungen abzubauen und sich bei weiteren Funktionsmodulen beim Zustandsübergang vom Prüfbetrieb zum Echtzeitbetrieb anzumelden und beim Zustandsübergang vom Echtzeitbetrieb zum Prüfbetrieb abzumelden.

Mit dem erfindungsgemäßen Laufzeitsystem für eine Datenverarbeitungsanlage zur Echtzeitausführung eines Anlagensteuerprogramms auf der Grundlage einer Steuerprogrammbeschreibung können Funktionsmodule zur Ausführung des Anlagensteuerprogramms im Laufzeitsystem dynamisch verwaltet werden. Es besteht nicht mehr die Notwendigkeit, die Funktionsmodule vor dem Start des Laufzeitsystems in jeweils für sich ausführbare Programmcodes zu übersetzen und zu einem gemeinsamen Laufzeitsystem zu binden. Die Funktionsmodule können während der Laufzeit erzeugt, hochgefahren und ausgeführt bzw. wieder heruntergefahren und abgeschaltet werden. Die einzelnen Funktionsmodule können ferner mit unterschiedlichen Werkzeugen bzw. unterschiedlichen Programmiersprachen erstellt werden. Die Funktionsmodule arbeiten im selben Zeitkontext und verwenden einen gemeinsamen Speicherraum und gemeinsame Dateitypen, so dass ein Datenaustausch ohne zusätzliches Verlinken möglicht ist. Durch den standardisierten Aufbau sämtlicher Funktionsmodule lassen sich im Laufzeitsystem außerdem auf einfache Weise Veränderungen und Anpassungen vornehmen.

Gemäß einer Ausführungsform ist das Verwaltungsmodul ausgelegt, auf der Grundlage einer Instanzbeschreibung die Instanz eines Funktionsmoduls zu erzeugen. Die ausführenden Anwendungen können so auf einfache Weise wahlfrei im Echtzeit-Kontext aus den vorhandenen Funktionsmodulen zusammengestellt werden.

Gemäß einer weiteren Ausführungsform ist wenigstens ein Funktionsmodul als Systemfunktionsmodul ausgebildet, das einen Basisdienst des Anlagensteuerprogramms zur Verfügung stellt, wobei der Basisdienst vorzugsweise eine Echtzeitsteuerung ist. Durch die Behandlung der Systemfunktionsmodule als Funktionsmodule lassen sich im Laufzeitsystem auf einfache Weise Basisdienste hinzufügen und abändern.

Gemäß einer weiteren Ausführungsform ist wenigstens ein Funktionsmodul als Anwenderfunktionsmodul ausgebildet, das wenigstens eine Maschinenfunktionalität abbildet. Der Zustandsmaschine des Anwenderfunktionsmoduls kann dabei eine weitere Zustandsmaschine unterlagert sein, die im Zustand Echtzeitbetrieb der Zustandsmaschine des Anwenderfunktionsmoduls gestartet werden kann. Mit dieser Auslegung der Anwenderfunktionsmodule kann einfach und zuverlässig auch eine Anwendung mit einem komplexen Verhalten erzeugt werden.

Gemäß einer weiteren Ausführungsform belegen die Funktionsmodule beim Zustandsübergang von Initialisierung zum Vorbetrieb Ressourcen des Datenverarbeitungssystems und geben beim Zustandsübergang vom Vorbetrieb zur Initialisierung belegte Ressourcen wieder frei. Ferner sichern sich die Funktionsmodule beim Zustandsübergang vom Prüfbetrieb zum Echtzeitbetrieb Ressourcen von weiteren Funktionsmodulen und geben beim Zustandsübergang vom Echtzeitbetrieb zum Prüfbetrieb belegte Ressourcen der weiteren Funktionsmodule zurück. Diese Vorgehensweise sichert einen zuverlässigen Betrieb des Laufzeitsystems und eine effektive Ressourcenverwaltung.

Gemäß einer weiteren Ausführungsform können die Funktionsmodule als weitere Elemente umfassen: Schnittstelle, Schnittstellenzeiger, Parameterbereich, Datenbereich, Datenbereichszeiger, Zeitkontext-Beschreibungsbereich, Konfigurationsbereich und Referenzzähler. Der Referenzzähler überwacht dabei die Lebenszeit des Funktionsmoduls und ist ausgelegt, beim Anmelden einer Schnittstelle den Zählwert um 1 zu erhöhen und beim Abmelden einer Schnittstelle den Zählwert um 1 zu erniedrigen. Beim Zählwert 0 kann sich das Funktionsmodul dann selbstständig löschen. Die Funktionsmodule lassen sich so auf einfach Weise in Form eines Baukastensystems erzeugen.

Die Erfindung wird anhand der beigefügten Figuren näher erläutert.

Es zeigen:
Figur 1 eine Ausführungsform eines erfindungsgemäßen Laufzeitsystems;
Figur 2 den möglichen Aufbau eines erfindungsgemäßen Funktionsmoduls; und
Figur 3 die Zustandmaschine eines erfindungsgemäßen Funktionsmoduls.

In der Industrieautomation, d. h. der Steuerung und Überwachung von technischen Prozessen, werden seit langem speicherprogrammierbare und numerische Steuerungen (SPS/NC) eingesetzt. Der zu steuernde und überwachende technische Prozess kann dabei auf einer Maschine oder einer komplexen Fertigungsanlage laufen. Die SPS/NC kann jedoch auch eine Lagerverwaltung oder eine Gebäudesteuerung sein. Die Begriffe Anlage und Anlagesteuerungsprogramm werden im Weiteren dann auch umfassend verstanden als Objekt, auf dem ein technischer Prozess abläuft. SPS/NC können dabei auf verschiedene Weise realisiert werden: als eigenständige Rechnerbaugruppe mit einem proprietären Betriebssystem und einer Schnittstelle, über die das auszuführende Anlagensteuerprogramm geladen wird. SPS/NC weisen ferner Eingänge auf, an die Sensoren angeschlossen sind, die die SPS/NC über das Geschehen in der zu steuernden Anlage informieren. Ausgänge der SPS/NC sind dann an Aktoren der zu steuernden Anlage angeschlossen. Alternativ zu Ein- und Ausgangsbausteinen kann die Anbindung an die zu steuernde Anlage auch über Feldbussysteme erfolgen.

Durch das Anlagensteuerprogramm wird dabei festgelegt, welche Signale auf die Ausgänge in Abhängigkeit von den Signalen auf den Eingängen ausgegeben werden sollen, damit die zu steuernde Anlage in der gewünschten Weise arbeitet. Ein Laufzeitsystem der SPS/NC stellt sicher, dass das Anlagensteuerprogramm ordnungsgemäß abgearbeitet wird und dass dem Anlagensteuerprogramm immer rechtzeitig der aktuelle Prozesszustand zur Verfügung steht.

Statt als eigenständigen Baugruppen kann die SPS/NC auch als reine Softwareemulation (Soft-SPS/NC) ausgeführt sein, die auf einer Standard-Datenverarbeitungsanlage z. B. einem Industrie-PC oder einem Embedded-PC, unter dessen Wirtsbetriebssystem z. B. Windows oder Unix laufen. Die Soft-SPS/NC sorgt dabei für eine Echtzeiterweiterung des Wirtsbetriebssystems und bindet die Ein- und Ausgänge bzw. Feldbussysteme an die Sensoren bzw. Aktoren der zu steuernden Anlage an.

Wie bei der konventionellen SPS/NC bestimmt ein Laufzeitsystem der Soft-SPS/NC auf der Grundlage einer Steuerprogrammbeschreibung den Prozessablauf auf der zu steuernden Anlage. Die Steuerprogrammbeschreibung kann dabei über ein eigenständiges Engineering-Werkzeug extern erzeugt und über eine Schnittstelle der Soft-SPS/NC zur Verfügung gestellt oder auch durch ein entsprechendes Programmierwerkzeug der Soft-SPS/NC selbst erstellt werden.

Um insbesondere auch mit Soft-SPS/NC komplexe Anlagen in Echtzeit steuern und gleichzeitig den Engineering-Aufwand bei der Programmerstellung zu reduzieren, wird ein modulares Konzept bei der SPS/NC-Auslegung eingesetzt. Dazu werden einzelne Funktionalitäten, Aggregate oder Baugruppen der zu steuernden Anlage als getrennte Anwendungen betrachtet, für die ein eigenständiges Funktionsmodul erstellt wird. Die Funktionsmodule weisen dabei eine Schnittstelle zur Kommunikation untereinander und eine zusätzlich vorgesehenen Softwareumgebung, in die die Funktionsmodule eingebettet sind, um ein Gesamtsystem zu bilden, auf. Dabei besteht die Möglichkeit, die Funktionsmodule hierarchisch aufzubauen, mit Basisfunktionsmodulen für vielfach in einer zu steuernden Anlage auftretende Funktionalitäten und solchen Basisfunktionsmodulen übergeordneten Funktionsmodulen, die zur Ausführung komplexer Aufgaben auf diese Basisfunktionsmodule zurückgreifen.

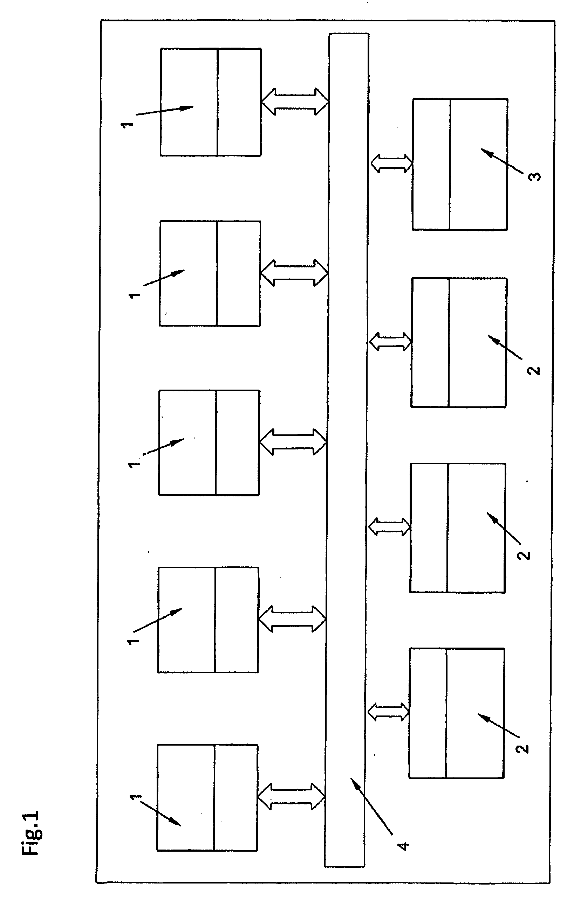

Figur 1 zeigt schematisch die Struktur eines Laufzeitsystems für eine Datenverarbeitungsanlage zur Echtzeitausführung eines Anlagensteuerprogramms auf der Grundlage einer Steuerprogrammbeschreibung mit Funktionsmodulen. In Figur 1 ist dabei das Laufzeitsystem an einem bestimmten Punkt bei der Ausführung des Anlagensteuerprogramms dargestellt. Das Laufzeitsystem lässt sich in einen Systembereich und einen Anwenderbereich unterteilen. Im Anwenderbereich sind in Figur 1 fünf Anwenderfunktionsmodule 1 und im Systembereich drei Systemfunktionsmodule 2 und ein Verwaltungsmodul 3 aktiv. Alle Module sind über eine Kommunikationsschicht miteinander verbunden, über die der Zugriff auf die jeweiligen Module erfolgt. Wenn die Datenverarbeitungsanlage einen einheitlichen Speicherraum bildet, wird dabei ein direkter Zugriff zwischen den Modulen durchgeführt. Wenn dagegen die Datenverarbeitungsanlage verteilt ausgelegt ist, und mehrere vernetzte Rechnerbausteine aufweist, ist die Kommunikationsschicht 4 als Nachrichtenrouter ausgebildet, der über Schnittstellen mit den Funktionsmodulen verbunden ist. Die Kommunikationsschicht 4 kann jedoch auch aus einer Kombination aus direktem Zugriff und Nachrichtenrouter bestehen, wenn einige Module sich im gleichen Speicherraum der Datenverarbeitungsanlage und andere Module sich in einem weiteren Speicherraum der Datenverarbeitungsanlage befinden.

Die Anwenderfunktionsmodule und die Systemfunktionsmodule sind dabei identisch aufgebaut. Die Funktionsmodule bestehen jeweils aus einer Reihe von Elementen, wobei drei Elemente, nämlich eine Zustandsmaschine, eine Modulbeschreibung und eine Funktionsmodulschnittstelle vorgeschrieben, weitere Elemente dagegen nur optional sind. Alle Elemente der Funktionsmodule sind dabei standardisiert.

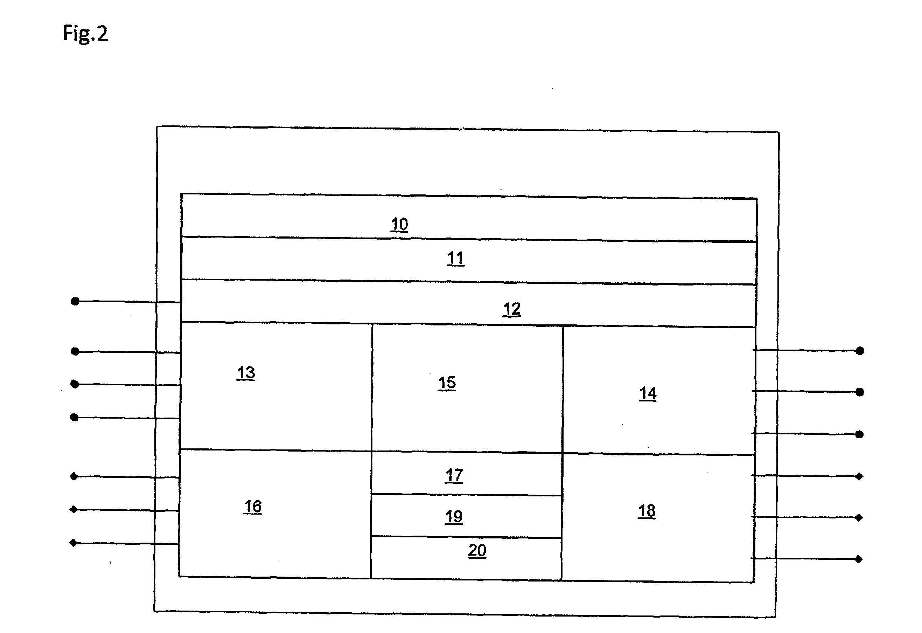

Figur 2 zeigt den möglichen Aufbau der Funktionsmodule mit den drei vorgeschriebenen und weiteren optionalen Elementen. Jedes Funktionsmodul enthält die Zustandsmaschine 10, die das Verhalten des Funktionsmoduls beschreibt und aus Zuständen und Zustandsübergängen besteht. Die Zustandsübergänge können dabei von außen angestoßen werden. Die Zustandmaschine 10 weist die Zustände Initialisierung, Vorbetrieb, Prüfbetrieb und Echtzeitbetrieb sowie die Zustandsübergänge zwischen Initialisierung und Vorbetrieb, zwischen Vorbetrieb und Prüfbetrieb und zwischen Prüfbetrieb und Echtzeitbetrieb auf.

Der Funktionsmodul-Zustandsmaschine 10 können weitere Zustandsmaschinen unterlagert sein, die im Zustand Echtzeitbetrieb gestartet werden können. Die Funktionsmodul-Zustandsmaschine 10 ist dabei so ausgelegt, dass die Zustände Initialisierung, Vorbetrieb und Prüfbetrieb sowie der Zustandsübergang zwischen Initialisierung und Vorbetrieb und der Zustandsübergang zwischen Vorbetrieb und Prüfbetrieb in einem Nicht-Echtzeit-Kontext, der Zustand Echtzeitbetrieb und der Zustandsübergang zwischen Prüfbetrieb und Echtzeitbetrieb aber in einem Echtzeit-Kontext liegen.

Neben der Funktionsmodul-Zustandsmaschine 10, die das Ablaufverhalten des Funktionsmoduls festlegt, weist das Funktionsmodul als weiteres zwingend vorgeschriebenes Element die Modulbeschreibung 11 auf, die Eigenschaften des Moduls festlegt und zusätzlich Kennungen, insbesondere eine Modulkennung enthält, die innerhalb des Laufzeitsystems für das Funktionsmodul eindeutig ist. Die Moduleigenschaften können dabei in der Modulbeschreibung durch eine Klassenkennung gekennzeichnet sein, die wiederum auf eine Klassenbeschreibung verweist, die Teil der Steuerprogrammbeschreibung oder auch im Modul selbst eingebettet sein kann. Die Klassenbeschreibung gibt unter anderem alle Elemente des Funktionsmoduls, insbesondere die nachstehend erläuterten Elemente, an, nämlich welche Schnittstellen im Modul implementiert sind, welche Schnittstellenzeiger gesetzt werden können, welche Datenbereiche das Modul enthält, welche Datenbereichszeiger vorgesehen sind, welche Parameter im Modul eingestellt werden können, in welchen Zeitkontexten das Modul arbeitet. Als weitere Kennung kann die Modulbeschreibung auch eine Vererbungskennung enthalten, die anzeigt, dass das Funktionsmodul von einem weiteren Funktionsmodul abgeleitet ist.

Neben der Zustandsmaschine 10 und der Modulbeschreibung 11 enthält dieses Funktionsmodul zwingend die Funktionsmodulschnittstelle 12 zum Zugriff auf die Zustandsmaschine 10 und die Modulbeschreibung 11. Außer dieser fest vorgeschriebenen Funktionsmodulschnittstelle 12 kann das Funktionsmodul als optionale Elemente weitere Schnittstellen 13 umfassen. Diese weiteren Schnittstellen 13 geben jeweils ein oder mehrere Elemente des Funktionsmoduls an, die von extern ansprechbar sind bzw. auf die von außen zugegriffen werden kann. Jede der Schnittstellen 13 ist dabei über eine zugeordnete eindeutige Schnittstellenkennung identifizierbar. Diese Schnittstellenkennungen ermöglichen es weiteren Funktionsmodulen festzustellen, ob eine Kommunikation mit dem Funktionsmodul möglich ist. Allen Schnittstellen der Funktionsmodule liegt dabei eine Basisschnittstellenauslegung zugrunde, die wenigstens zwei Basisdienste bereitstellt, nämlich eine Schnittstellen-Anfragefunktion und eine Modullebensfunktion. Diese beiden Basisdienste werden auch von der Funktionsmodulschnittstelle 12 zum Zugriff auf die Zustandsmaschine 10 und die Modulbeschreibung 11 unterstützt.

Mögliche weitere Schnittstellen, die bei den Funktionsmodulen vorgesehen sein können, sind insbesondere eine Schnittstelle zum zyklischen Aufruf des Funktionsmoduls und korrespondierend dazu eine Schnittstelle, über die sich weitere Funktionsmodule anmelden können, um einen zyklischen Aufruf durch das Funktionsmodul zu erhalten. Ferner sind in der Regel Schnittstellen zur Prozessdatenabfrage bzw. Prozessdatenabgabe vorgesehen. Diese beiden Schnittstellen werden zur Aktualisierung der Ein- und Ausgänge des Funktionsmoduls genutzt. Weitere Schnittstellen ermöglichen den Zugriff auf die optionalen Elemente des Funktionsmoduls, die nachstehend erläutert werden, nämlich einen Datenbereich, einen Parameterbereich, einen Zeitkontextbeschreibungsbereich und einen Referenzzähler.

Ferner kann als eine allgemeine Schnittstelle des Funktionsmoduls eine Echtzeit-Schnittstelle vorgesehen sein. Wenn dem Funktionsmodul eine Echtzeitaufgabe zugeordnet ist, können über die Echtzeit-Schnittstelle dann die Zykluszeit, die Priorität und weitere Informationen der Echtzeitaufgabe abgefragt werden. Neben diesen allgemeinen Schnittstellen, deren Dienste genau festgelegt sind und die deshalb auch zentral ausgetauscht und verändert bzw. an weitere Schnittstellen vererbt werden können, kann das Funktionsmodul auch individuelle Schnittstellen aufweisen, die nur mit identisch ausgestalteten individuellen Schnittstellen eines weiteren Funktionsmoduls kommunizieren können.

Außer den Schnittstellen 13 besitzt das Funktionsmodul als weiteres optionales Element Schnittstellenzeiger 14, die als Gegenstück zu den Schnittstellen anzusehen sind. Über die Schnittstellenzeiger 14 kann das Funktionsmodul auf eine durch diesen Schnittstellenzeiger gekennzeichnete Schnittstelle eines weiteren Funktionsmoduls zugreifen. Alle Funktionsmodule besitzen dabei einen Schnittstellenzeiger, der auf eine Verwaltungsmodul-Schnittstelle des Verwaltungsmoduls 3 im Laufzeitsystem gerichtet ist, um das Funktionsmodul bei diesem Verwaltungsmodul an- und abmelden zu können. Die Schnittstellenzeiger werden beim Hochlaufen des Funktionsmoduls im Nicht-Echtzeitkontext, also in den Zuständen Initialisierung, Vorbetrieb, Prüfbetrieb und den dazwischen liegenden Zustandsübergängen, gesetzt.

Als weiteres optionales Element enthält das Funktionsmodul den Parameterbereich 15. Im Parameterbereich 15 ist der Datentyp eines spezifischen Parameters durch eine Parameterkennung angegeben und außerdem der eigentliche Parameterwert. Auf die Parameterkennungen und die Parameterwerte kann über die dafür vorgesehene Parameterbereich-Schnittstelle, wie sie vorstehend beschrieben wurde, von außen zugegriffen werden.

Ein weiteres optionales Element des Funktionsmoduls ist der Datenbereich 16, auf den gleichfalls mit der dafür vorgesehenen Datenbereich-Schnittstelle von außen zugegriffen werden kann. Die Struktur des Datenbereichs 16 wird durch die Modulbeschreibung 11 festgelegt. Bei Anwenderfunktionsmodulen wird der Datenbereich 16 zum Ein- und Auslesen von Prozessabbildern genutzt. Der Datenbereich kann dabei auch Symboldaten enthalten, die den Aufbau des Datenbereichs detailliert beschreiben.

Zum Zugriff auf Datenbereiche weiterer Funktionsmodule kann das Funktionsmodul als optionales Element Datenbereichszeiger 17 enthalten, die auf die gewünschten Datenbereiche verweisen, auf die dann über eine entsprechend vorgesehene Datenbereich-Schnittstelle zugegriffen werden kann. Diese Datenbereichszeiger 17 werden ähnlich den Schnittstellenzeigern 14 im Nicht-Echtzeit-Kontext im Funktionsmodul gesetzt.

Als weiteres optionales Element kann das Funktionsmodul den Zeitkontextbeschreibungsbereich 18 aufweisen. Dieser Zeitkontextbeschreibungsbereich 18 ist insbesondere dann vorgesehen, wenn das Funktionsmodul in mehreren Zeitkontexten aktiv sein kann, also das Funktionsmodul mehrere zeitlich unabhängige Anwendungen unterstützt oder eine Regelkreisanwendung einen untergelagerten Regelkreis mit einer anderen Zykluszeit verarbeitet. Wenn das Funktionsmodul einen solchen Zeitkontextbeschreibungsbereich 18 hat, ist dieses Element als Eigenschaft des Funktionsmoduls in der Modulbeschreibung 11 angegeben.

Als weiteres optionales Element weist das Funktionsmodul den Referenzzähler 19 auf, der die Lebenszeit des Funktionsmoduls überwacht. Der Referenzzähler 19 ist dabei vorzugsweise so ausgelegt, dass, wenn eine Schnittstelle des Funktionsmoduls herausgegeben wird, also das Funktionsmodul sich bei einem weiteren Funktionsmodul oder beim Verwaltungsmodul anmeldet, der Referenzzähler 19 um 1 erhöht wird. Beim nachfolgenden Abmelden der Schnittstelle durch das Funktionsmodul wird der Referenzzähler 19 dann wieder um 1 erniedrigt. Erreicht der Referenzzähler 19 beim Dekrementieren den Wert 0, löscht sich das Funktionsmodul selbstständig. Dies ereignet sich in der Regel nach dem Abmelden vom Verwaltungsmodul 3. Ferner ist der Referenzzähler 19 jedoch so ausgelegt, dass er die Funktionsmodullöschung blockiert, solange ein Schnittstellenzeiger eines weiteren Funktionsmoduls auf eine Schnittstelle des Funktionsmoduls zeigt. Wenn diese Schnittstellenzeiger des weiteren Funktionsmoduls dann freigegeben werden, hebt der Referenzzähler 19 die Funktionsmodullöschung auf.

Ein optionales Element beim Funktionsmodul kann auch ein Konfigurationsbereich 20 sein. Dieser Konfigurationsbereich 20 umfasst Konfigurationskennungen, die festlegen, mit welchen weiteren Funktionsmodultypen das Funktionsmodul verbunden werden kann. Auf der Grundlage dieser Konfigurationskennungen, die auch in Modulbeschreibungen 11 gespeichert sind, kann dann auf einfache Weise festgelegt werden, welche Funktionsmodule kombiniert werden können, um ein Anlagensteuerprogramm umzusetzen.

Wie bereits ausgeführt, sind alle Funktionsmodule des Laufzeitsystems, sowohl die Anwenderfunktionsmodule im Anwenderbereich als auch die Systemfunktionsmodule im Systembereich, gleich aufgebaut und mit den drei vorgeschriebenen und weiteren optionalen Elementen ausgestattet. Die einzelnen Funktionsmodule können dabei mit unterschiedlichen Werkzeugen bzw. unterschiedlichen Programmiersprachen, z. B. C/C++, I/O-Konfiguration, PLC-Control, Simulation oder auch IEC61131-3 erstellt werden. Ferner kann ein zusätzliches Engineering-Werkzeug vorgesehen sein, mit dem eine in einer beliebigen Programmiersprache erstellte Anwendung in ein vorstehend dargestelltes standardisiertes Funktionsmodul zum Einsatz im Echtzeit-Laufzeitsystem gemäß Figur 1 umgesetzt werden kann. Das Engineering-Werkzeug kann die in der jeweiligen Programmiersprache erzeugte Anwendung dann entsprechend dem beschriebenen formalisierten Funktionsmodulaufbau verpacken und die fest vorgeschriebenen Elemente Zustandmaschine, Modulbeschreibung und Funktionsmodulschnittstelle zum Zugriff auf die Zustandsmaschine und die Modulbeschreibung sowie auch weitere optionale Funktionsmodulelemente hinzufügen.

Die Funktionsmodule können ganz einfach und auch sehr komplex aufgebaut sein. Die Funktionsmodule des Anwenderbereichs dienen zur Steuerung und Regelung von Anlagenfunktionalitäten bzw. Maschinenaggregaten, z. B. einer Vorschubeinheit, einer Spindel, einem Werkzeugwechsler oder anderer mechatronischer Einheiten. Die in der Modulbeschreibung festgehaltenen Eigenschaften geben dann einen Algorithmus vor, der das Verhalten dieser mechatronischen Einheit abbildet. Dabei besteht die Möglichkeit, dass das Anwenderfunktionsmodul nur eine einfache Funktionalität steuert oder auch einen sehr komplexen Prozessablauf. Das Anwenderfunktionsmodul kann dann mehrere ineinander verschachtelte, der Funktionsmodul-Zustandsmaschine untergeordnete weitere Zustandsmaschinen besitzen, die abhängig vom Status der Funktionsmodul-Zustandsmaschine gestartet werden. So kann z. B. ein Anwenderfunktionsmodul zwei untergeordnete Zustandsmaschinen zum Steuern zweier miteinander verbundener Antriebe aufweisen, wobei diese beiden Zustandsmaschinen sich wieder gegenseitig bedingen, d. h. voneinander abhängig sind.

Neben solchen Anwenderfunktionsmodulen weist das Laufzeitsystem die Systemfunktionsmodule auf, deren Aufbau dem der Anwenderfunktionsmodule entspricht und die die Basisdienste des Laufzeitsystems zur Echtzeitausführung des Anlagensteuerprogramms bereitstellen. Ein solcher Basisdienst für die SPS/NC ist die Echtzeitüberwachung, die für eine Echtzeitausführung von Anwendungen im Laufzeitsystem sorgt. Das Echtzeit-Systemfunktionsmodul weist dann als Funktionsmodulelement zusätzlich eine Echtzeit-Schnittstelle auf, auf die die weiteren Funktionsmodule zugreifen können, um die Echtzeitausführung der vom jeweiligen Funktionsmodul durchgeführten Anwendung zu gewährleisten bzw. dem Funktionsmodul zu ermöglichen, eine solche Echtzeitanwendung zu erstellen. Weitere Systemfunktionsmodule sind Treiber für die Ein- und Ausgänge bzw. für die Feldbussysteme. Ferner kann ein Systemfunktionsmodul vorgesehen sein, bei dem sich die Funktionsmodule anmelden und das den Bus 4, an den die Funktionsmodule angebunden sind, steuert. Als weitere Systemmodule können Überwachungsfunktionsmodule, Dokumentationsfunktionsmodule oder Verwaltungsfunktionsmodule für verschiedene Kennungen in der Modulbeschreibung vorgesehen sein.

Die Systemfunktionsmodule werden in der Regel automatisch beim Start des Laufzeitsystems geladen, während die Anwenderfunktionsmodule dagegen auch erst zu einem späteren Zeitpunkt vom Verwaltungsmodul oder von anderen Funktionsmodulen hochgefahren werden können. Wie vorstehend erläutert, sind die Funktionsmodule grundsätzlich unabhängig voneinander entwickelbar, weisen jedoch alle den vorstehend beschriebenen standardisierten Aufbau auf.

Zusätzlich zu diesem standardisierten Aufbau der Funktionsmodule ist ein einheitliches Datentypsystem und eine einheitliche Verwaltung der von den Funktionsmodulen verwendeten verschiedenen Kennungen für Schnittstellen, Parameterbereich, Datenbereich, Konfigurationsbereich erforderlich. Die Kennungen müssen dabei, um eine Interaktion zwischen den Funktionsmodulen im Rahmen des Laufzeitsystems zu ermöglichen, eindeutig festgelegt sein. Hierbei besteht die Möglichkeit, dass jede Kennung über eine lange Zufallszahl erzeugt wird, die gewährleistet, dass aufgrund des großen Zahlenraums keine gleichen Kennungen auftreten. Eine lange Zufallszahlkennung, z. B. eine 128 Bit lange Zufallszahl, erfordert jedoch eine aufwändige und zeitraubende Verarbeitung, die insbesondere im Rahmen eines Laufzeitsystems zur Echtzeitausführung eines Anlagensteuerprogramms sehr störend sein kann.

Um alternativ mit einer kürzeren Zahlenkombination arbeiten zu können, die eine ressourcen- und zeitschonende Bearbeitung ermöglicht, ist es dann jedoch erforderlich, die Kennung aktiv zu verwalten. Eine z. B. nur 32 Bit lange Zahlenkennung wird in einen zentral verwalteten Bereich, z. B. für die ersten 16 Bit, und einen lokal verwalteten Bereich, z. B. für die zweiten 16 Bit, aufgeteilt. Dem Entwickler der einzelnen Funktionsmodule werden dann aus dem zentral verwalteten Bereich eine oder mehrere 16-Bit-Zahlen zugewiesen, die bei der Programmierung des Funktionsmoduls für die im Funktionsmodul vorgesehenen Kennungen zu verwenden sind. Die weiteren 16 Bit der 32 Bit langen Zahlen können dann bei der Funktionsmodulerzeugung individuell festgelegt werden und müssen nur innerhalb des Funktionsmoduls eindeutig sein.

Bei der Festlegung einer Datentypkennung für die von den Funktionsmodulen verwendeten Datentypen kann grundsätzlich mit langen Zufallszahlen, z. B. einer 128 Bit langen Zufallszahl gearbeitet werden. Diese Datentypkennungen werden nämlich nicht vom Laufzeitsystem bzw. den Funktionsmodulen im Echtzeit-Kontext ausgewertet, sondern im Nicht-Echtzeit-Kontext beim Hochfahren des Systems, so dass ausreichend Zeit für eine Auswertung bleibt. Mit Hilfe der Datentypkennungen wird sichergestellt, dass ein einheitliches Datentypsystem von allen Funktionsmodulen verwendet wird, wobei die Datentypen immer eindeutig beschrieben sind, um einen zuverlässigen Datenaustausch zwischen den Funktionsmodulen nach außen zu gewährleisten. Die Datentypkennungen stellen sicher, dass die Funktionsmodule die Daten gleich interpretieren, unabhängig vom Dateinamen. Die verschiedenen Programmiersprachen, mit denen die Funktionsmodule hergestellt werden können, verwenden nämlich oft gleiche Datennamen für unterschiedliche Datentypen, so dass eine Datentypbeschreibung ausschließlich über den Datennamen nicht eindeutig ist. Zudem werden die Datentypen auch oft verändert, ohne eine Datennamensänderung durchzuführen.

Wie in Figur 1 dargestellt, weist das Laufzeitsystem zusätzlich zu den Funktionsmodulen das zentrale Verwaltungsmodul 3 auf. Das Verwaltungsmodul 3 unterscheidet sich im Aufbau von den standardisierten Funktionsmodulen und weist eine spezielle Verwaltungsmodul-Schnittstelle auf. Das Verwaltungsmodul 3 ermöglicht im Rahmen des Laufzeitsystems zur Echtzeitausführung eines Anlagensteuerprogramms eine dynamische Verwaltung der Funktionsmodule auf der Grundlage einer Steuerprogrammbeschreibung. Beim Start des Laufzeitsystems wird das Verwaltungsmodul als erstes Modul hochgefahren und greift auf die Steuerprogrammbeschreibung zu, die die Echtzeitausführung des Anlagensteuerprogramms auf der Grundlage der Funktionsmodule festlegt. Die Steuerprogrammbeschreibung enthält Beschreibungsdaten für die auszuführenden Instanzen der Funktionsmodule im Rahmen des Anlagensteuerprogramms. Jede Instanzbeschreibung legt die konkrete Einstellung eines Funktionsmoduls, d. h. die zu verwendenden Parameter, Schnittstellen, Schnittstellenzeiger, Datenbereiche, Datenbereichszeiger, Zeitkontexte etc. fest.

Das Verwaltungsmodul 3 erzeugt dann auf der Grundlage der Instanzbeschreibung die entsprechende Instanz des Funktionsmoduls direkt nach dem eigenen Hochfahren oder auch zu einem späteren Zeitpunkt auf der Grundlage der weiteren Vorgaben in der Steuerprogrammbeschreibung. Die Instanzerzeugung kann dabei vom Verwaltungsmodul anhand der Modulklassenkennung erfolgen. Dazu ruft das Verwaltungsmodul über seine Verwaltungsmodul-Schnittstelle ein Modulklassen-Systemmodul auf, das die Erzeugung von Modulklassen ermöglicht. Dieses Modulklassen-Systemmodul wird, wie die weiteren Systemmodule, beim Start des Laufzeitsystems automatisch initialisiert und meldet sich wie die anderen Systemmodule beim Zustandsübergang von Initialisierung zum Vorbetrieb mit seiner Modulkennung beim Verwaltungsmodul an. Zur Instanzerzeugung wählt das Verwaltungsmodul dann im Modulklassen-Systemmodul die zur Klassenkennung gehörigen Modulklassen-Erzeugungselemente aus und veranlasst den Aufbau der Funktionsmodulinstanz.

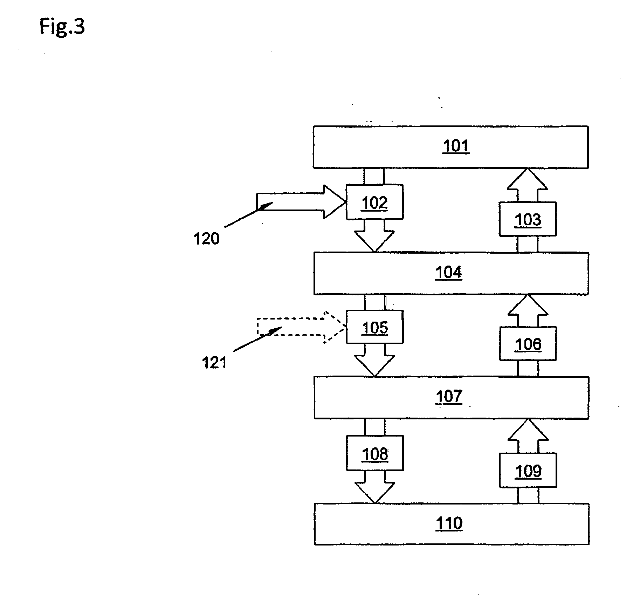

Figur 3 zeigt die Zustandsmaschine des Funktionsmoduls und deren Zustandsübergänge im Rahmen des Laufzeitsystems unter Verwaltung durch das Verwaltungsmodul. Die Erzeugung der Instanz des Funktionsmoduls erfolgt im Zustand Initialisierung 101. Nach Abschluss der Instanzerzeugung des Funktionsmoduls geht das Funktionsmodul sofort vom Zustand Initialisierung 101 in den Zustand Vorbetrieb 104 über. Bei diesem Zustandsübergang 102 meldet sich das Funktionsmodul beim Verwaltungsmodul mit seiner Modulkennung an. Im Gegenzug erhält das Funktionsmodul vom Verwaltungsmodul Parameter 120. Beim Zustandsübergang 102 von Initialisierung zu Vorbetrieb ist das Funktionsmodul von den weiteren Funktionsmodulen vollständig isoliert und kann keine Kommunikation mit diesen Funktionsmodulen durchführen. Ferner werden beim Zustandsübergang 102 von Initialisierung 101 zum Vorbetrieb 104 dem Funktionsmodul vom Verwaltungsmodul, falls erforderlich, die für den Echtzeitbetrieb notwendigen Ressourcen, insbesondere die Speicherbereiche der Datenverarbeitungsanlage, zugeordnet. Im Zustand Vorbetrieb 104 ist das Funktionsmodul dann vollständig angelegt und in der Regel auch weitgehend parametriert. Das Funktionsmodul ist beim Verwaltungsmodul angemeldet, hat jedoch noch keinen Kontakt zu weiteren Funktionsmodulen.

Beim Zustandsübergang 105 vom Vorbetrieb 104 zum Prüfbetrieb 107 kann das Funktionsmodul dann Verbindung zu weiteren Funktionsmodulen aufnehmen. Die notwendigen Verbindungen bestimmt das Funktionsmodul auf der Grundlage der zugewiesenen Initialisierungsdaten, die die Modulkennungen der Funktionsmodule enthalten, zu denen Verbindung aufgenommen werden soll. Die Verbindungen zwischen den Funktionsmodulen werden dabei vom Verwaltungsmodul hergestellt, das mit Hilfe der Verwaltungsmodul-Schnittstelle die Funktionsmodule anhand ihrer Modulkennung identifiziert. Der Zustandsübergang 105 vom Vorbetrieb 104 zum Prüfbetrieb 107 kann dabei vom Verwaltungsmodul angestoßen werden. Ferner können beim Zustandsübergang 105 vom Vorbetrieb 104 zum Prüfbetrieb 107 noch weitere Parameter 121 an das Funktionsmodul übergeben werden. So können, wenn die Modulbeschreibung z. B. eine Vererbungskennung enthält, die Parameter vom zugrundeliegenden Funktionsmodul auf das abgeleitete Funktionsmodul übertragen werden.

Im Zustand Prüfbetrieb 107 wartet das Funktionsmodul dann bis seine Funktionalität aufgerufen wird. Die Zustände Initialisierung 101, Vorbetrieb 104 und Prüfbetrieb 107 sowie die Zustandübergänge 102, 105 von der Initialisierung zum Vorbetrieb bzw. Vorbetrieb zum Prüfbetrieb finden dann im Nicht-Echtzeit-Kontext, also bevor die dem Funktionsmodul zugeordnete Anwendung im Rahmen der Maschinensteuerung verwendet wird, statt.

Das Funktionsmodul wird, um seine Anwendung dann im Echtzeit-Kontext auszuführen, vom Verwaltungsmodul oder auch einem weiteren Funktionsmodul auf der Grundlage der Steuerprogrammbeschreibung in den Zustand Echtzeitbetrieb 110 überführt. Beim Zustandsübergang 108 vom Prüfbetrieb 107 zum Echtzeitbetrieb 110 besteht dabei für das Funktionsmodul die Möglichkeit, Ressourcen von weiteren Funktionsmodulen anzufordern, indem die Parameter- und Datenbereich-Schnittstellenzeiger entsprechend gesetzt werden. Ferner kann sich das Funktionsmodul auch bei weiteren Funktionsmodulen anmelden und den entsprechenden Schnittstellenzeiger setzen, um von diesem Funktionsmodul z. B. zyklisch aufgerufen zu werden. Im Zustand Echtzeitbetrieb 110 führt das Funktionsmodul dann seine Anwendung aus, wobei mögliche nachgelagerte Zustandsmaschinen gestartet werden.

Nach Abschluss der Anwendung setzt sich das Funktionsmodul dann vom Zustand Echtzeitbetrieb 110 in den Zustand Prüfbetrieb 107 zurück. Dieser Zustandsübergang 109 kann auch von weiteren Funktionsmodulen oder vom Verwaltungsmodul ausgelöst werden. Das Funktionsmodul macht alle Aktionen, die es beim Zustandsübergang 108 vom Prüfbetrieb zum Echtzeitbetrieb ausgeführt hat, wieder rückgängig und gibt alle Ressourcen, die es bei weiteren Funktionsmodulen angefordert hat, frei bzw. meldet sich bei diesen weiteren Funktionsmodulen ab.

Wenn das Funktionsmodul im Zustand Prüfbetrieb 107 aufgrund der Steuerprogrammbeschreibung z. B. längere Zeit nicht mehr benötigt wird, wird das Funktionsmodul aus dem Zustand Prüfbetrieb 107 in den Zustand Vorbetrieb 104 zurückgeführt. Dieser Zustandsübergang 106 kann vom Verwaltungsmodul veranlasst werden. Das Funktionsmodul setzt dann alle Aktionen wieder zurück, die es beim Zustandsübergang 105 vom Vorbetrieb 104 zum Prüfbetrieb 107 ausgeführt hat, und gibt alle hierbei angeforderten Ressourcen frei.

Wenn das Funktionsmodul dann im Rahmen der Steuerprogrammbeschreibung nicht mehr benötigt oder das Laufzeitsystem insgesamt beendet wird, wird das Funktionsmodul aus dem Zustand Vorbetrieb 104 dann in den Zustand Initialisierung 102 zurückgesetzt. Das Funktionsmodul macht bei diesem Zustandsübergang 103 alle Handlungen wieder rückgängig, die es beim Zustandsübergang 102 von Initialisierung zum Vorbetrieb ausgeführt hat, und gibt insbesondere auch die angeforderten Systemressourcen frei. Das Funktionsmodul meldet sich beim Verwaltungsmodul ab und löscht sich auch, wenn der Referenzzähler des Funktionsmoduls auf dem Wert 0 steht.

Mit dem erfindungsgemäßen Laufzeitsystem für eine Datenverarbeitungsanlage zur Echtzeitausführung eines Anlagensteuerprogramms auf der Grundlage einer Steuerprogrammbeschreibung können Funktionsmodule zur Ausführung des Anlagensteuerprogramms im Laufzeitsystem dynamisch verwaltet werden, d. h. während der Laufzeit erzeugt, hochgefahren und ausgeführt bzw. wieder heruntergefahren und abgeschaltet werden. Es ist nicht erforderlich, dass die einzelnen Funktionsmodule bereits beim Start des Laufzeitsystems vollständig geladen und ausführbar vorliegen. Erfindungsgemäß arbeiten alle Funktionsmodule im selben Zeitkontext, kompatiblen Datentypen und einem einheitlichen Speicherraum, was ein Verbinden der einzelnen Funktionsmodule über einen Linker nicht mehr notwendig macht.

## Patentansprüche

1. Laufzeitsystem für eine Datenverarbeitungsanlage zur Echtzeitausführung eines Anlagensteuerprogramms auf der Grundlage einer Steuerprogrammbeschreibung
mit einer Mehrzahl von Funktionsmodulen (1, 2), die jeweils eine Zustandsmaschine (10), die die Zustände Initialisierung (101), Vorbetrieb (104), Prüfbetrieb (107) und Echtzeitbetrieb (110) und Zustandsübergänge (102, 103) zwischen Initialisierung und Vorbetrieb, (105, 106) zwischen Vorbetrieb und Prüfbetrieb und (108, 109) zwischen Prüfbetrieb und Echtzeitbetrieb umfasst, wobei die Zustände Initialisierung, Vorbetrieb und Prüfbetrieb und der Zustandsübergang zwischen Initialisierung und Vorbetrieb und der Zustandsübergang zwischen Vorbetrieb und Prüfbetrieb einem Nicht-Echtzeitkontext und der Zustand Echtzeitbetrieb und der Zustandsübergang zwischen Prüfbetrieb und Echtzeitbetrieb einem Echtzeitkontext zugeordnet sind,
eine Modulbeschreibung (11), die Moduleigenschaften und eine eindeutige Modulkennung enthält, und
eine Funktionsmodul-Schnittstelle (12) zum Zugriff auf die Zustandsmaschine und die Modulbeschreibung
aufweisen, und
mit einem Verwaltungsmodul (3),
wobei das Verwaltungsmodul die Funktionsmodule auf der Grundlage der Steuerprogrammbeschreibung verwaltet,
wobei sich die Funktionsmodule am Verwaltungsmodul beim Zustandsübergang (102) von Initialisierung zum Vorbetrieb mit ihrer Modulkennung anmelden und beim Zustandsübergang (103) vom Vorbetrieb zur Initialisierung abmelden,
wobei die Funktionsmodule zu weiteren Funktionsmodulen über das Verwaltungsmodul beim Zustandsübergang (105) vom Vorbetrieb zum Prüfbetrieb Kommunikationsverbindungen aufbauen und beim Zustandsübergang (106) vom Prüfbetrieb zum Vorbetrieb Kommunikationsverbindungen abbauen, und
wobei sich die Funktionsmodule bei den weiteren Funktionsmodulen beim Zustandsübergang (108) vom Prüfbetrieb zum Echtzeitbetrieb anmelden und beim Zustandsübergang (109) vom Echtzeitbetrieb zum Prüfbetrieb abmelden.

2. Laufzeitsystem nach Anspruch 1, wobei das Verwaltungsmodul (3) ausgelegt ist, auf der Grundlage einer Instanzbeschreibung die Instanz eines Funktionsmoduls zu erzeugen.

3. Laufzeitsystem nach Anspruch 1 oder 2, wobei wenigstens ein Funktionsmodul als Systemfunktionsmodul (2) ausgebildet ist, das einen Basisdienst des Anlagensteuerprogramms zur Verfügung stellt.

4. Laufzeitsystem nach Anspruch 3, wobei der Basisdienst des Systemmoduls eine Echtzeitsteuerung ist.

5. Laufzeitsystem nach einem der vorhergehenden Ansprüche, wobei wenigstens ein Funktionsmodul als Anwenderfunktionsmodul (1) ausgebildet ist, das wenigstens eine Maschinenfunktionalität abbildet.

6. Laufzeitsystem nach Anspruch 5, wobei der Zustandsmaschine des Anwenderfunktionsmoduls (1) wenigstens eine weitere Zustandsmaschine unterlagert ist, die im Zustand Echtzeitbetrieb der Zustandsmaschine des Anwenderfunktionsmoduls gestartet werden kann.

7. Laufzeitsystem nach einem der vorhergehenden Ansprüche, wobei die Funktionsmodule (1, 2) beim Zustandsübergang (102) von Initialisierung zum Vorbetrieb Ressourcen des Datenverarbeitungssystems belegen und beim Zustandsübergang (103) vom Vorbetrieb zur Initialisierung belegte Ressourcen des Datenverarbeitungssystems freigeben.

8. Laufzeitsystem nach einem der vorhergehenden Ansprüche, wobei die Funktionsmodule (1, 2) beim Zustandsübergang (108) vom Prüfbetrieb zum Echtzeitbetrieb Ressourcen von weiteren Funktionsmodulen belegen und beim Zustandsübergang (109) vom Echtzeitbetrieb zum Prüfbetrieb belegte Ressourcen der weiteren Funktionsmodule freigeben.

9. Funktionsmodul (1, 2) zur Verwendung in einem ein Verwaltungsmodul (3) mit einer Verwaltungsmodul-Schnittstelle umfassenden Laufzeitsystem für eine Datenverarbeitungsanlage zur Echtzeitausführung eines Anlagensteuerprogramms mit einer Zustandsmaschine (10), die die Zustände Initialisierung (101), Vorbetrieb (104), Prüfbetrieb (107) und Echtzeitbetrieb (110) und Zustandsübergänge (102, 103) zwischen Initialisierung und Vorbetrieb, (105, 106) zwischen Vorbetrieb und Prüfbetrieb und (108, 109) zwischen Prüfbetrieb und Echtzeitbetrieb umfasst, wobei die Zustände Initialisierung, Vorbetrieb und Prüfbetrieb und der Zustandsübergang zwischen Initialisierung und Vorbetrieb und der Zustandsübergang zwischen Vorbetrieb und Prüfbetrieb einem Nicht-Echtzeitkontext und der Zustand Echtzeitbetrieb und der Zustandsübergang zwischen Prüfbetrieb und Echtzeitbetrieb einem Echtzeitkontext zugeordnet sind,
einer Modulbeschreibung (1), die Moduleigenschaften und eine eindeutige Modulkennung enthält, und
einer Funktionsmodul-Schnittstelle (12) zum Zugriff auf die Zustandsmaschine und die Modulbeschreibung, wobei das Funktionsmodul ausgelegt ist, sich beim Zustandsübergang (102) von Initialisierung zum Vorbetrieb mit seiner Modulkennung anzumelden und beim Zustandsübergang (103) vom Vorbetrieb zur Initialisierung abzumelden,
zu weiteren Funktionsmodulen über das Verwaltungsmodul beim Zustandsübergang (105) vom Vorbetrieb zum Prüfbetrieb Kommunikationsverbindungen aufzubauen und beim Zustandsübergang (106) vom Prüfbetrieb zum Vorbetrieb Kommunikationsverbindungen abzubauen, und
sich bei den weiteren Funktionsmodulen beim Zustandsübergang (108) vom Prüfbetrieb zum Echtzeitbetrieb anzumelden und beim Zustandsübergang (109) vom Echtzeitbetrieb zum Prüfbetrieb abzumelden.

10. Funktionsmodul nach Anspruch 9, das wenigstens eine Maschinenfunktionalität abbildet.

11. Funktionsmodul nach Anspruch 9 oder 10, das wenigstens eines der weiteren Elemente umfasst: Schnittstelle (13), Schnittstellenzeiger (14), Parameterbereich (15), Datenbereich (16), Datenbereichszeiger (17), Zeitkontext-Beschreibungsbereich (18), Konfigurationsbereich (20) und Referenzzähler (19).

12. Funktionsmodul nach Anspruch 11, wobei der Referenzzähler (19) die Lebenszeit des Funktionsmoduls überwacht und ausgelegt ist, beim Anmelden einer Schnittstelle den Zählwert um 1 zu erhöhen und beim Abmelden einer Schnittstelle den Zählwert um 1 zu erniedrigen, wobei sich beim Zählwert 0 das Funktionsmodul selbstständig löschen kann.

13. Computerprogrammprodukt mit Programmcodemitteln zum Durchführen des Laufzeitsystems oder des Funktionsmoduls nach einem der vorangehenden Ansprüche, wenn das Computerprogrammprodukt auf einer Datenverarbeitungsanlage abläuft oder auf einem computerlesbaren Aufzeichnungsmedium abgespeichert ist.

## Claims

1. A run-time system for a data-processing system for real-time execution of a system-control program on the basis of a control-program description
having a plurality of functional modules (1, 2), respectively comprising
a finite state machine (10) that comprises the states initialization (101), pre-operation (104), trial operation (107) and real-time operation (110) and state transitions (102, 103) between initialization and pre-operation, (105, 106) between pre-operation and trial operation and (108, 109) between trial operation and real-time operation, wherein the states initialization, pre-operation and trial operation and the state transition between initialization and pre-operation and the state transition between pre-operation and trial operation are assigned to a non-real-time context and the state real-time operation and the state transition between trial operation and real-time operation are assigned to a real-time context,
a module description (11) that contains module properties and a unique module identification, and
a functional-module interface (12) for accessing the finite state machine and the module description, and
having an administration module (3),
wherein the administration module manages the functional modules on the basis of the control-program description,
wherein the functional modules log on to the administration module with their module identification during the state transition (102) from initialization to pre-operation and log off during the state transition (103) from pre-operation to initialization,
wherein the functional modules establish communication connections with further functional modules via the administration module during the state transition (105) from pre-operation to trial operation and break down communication connections during the state transition (106) from trial operation to pre-operation, and
wherein the functional modules log on to the further functional modules during the state transition (108) from trial operation to real-time operation and log off during the state transition (109) from real-time operation to trial operation.

2. The run-time system according to claim 1, wherein the administration module (3) is configured to generate the entity of a functional module on the basis of an entity description.

3. The run-time system according to claim 1 or 2, wherein at least one functional module is configured as system functional module (2) that provides a basic service of the system-control program.

4. The run-time system according to claim 3, wherein the basic service of the system module is a real-time control.

5. The run-time system according to any of the preceding claims, wherein at least one functional module is configured as a functional user module (1) that maps at least one machine functionality.

6. The run-time system according to claim 5, wherein at least one further finite state machine is subordinate to the finite state machine of the functional user module (1), wherein the further finite state machine may be started up in the real-time operation state of the finite state machine of the functional user module.

7. The run-time system according to one of the preceding claims, wherein the functional modules (1, 2) occupy resources of the data-processing system during the state transition (102) from initialization to pre-operation and release occupied resources of the data-processing system during the state transition (103) from pre-operation to initialization.

8. The run-time system according to any one of the preceding claims, wherein the functional modules (1, 2) occupy resources of further functional modules during the state transition (108) from trial operation to real-time operation and release occupied resources of the further functional modules during the state transition (109) from real-time operation to trial operation.

9. A functional module (1, 2) for using in a run-time system for a data-processing system for real-time execution of a system-control program, the run-time system comprising an administration module (3) with an administration-module interface, the functional module having
a finite state machine (10) that comprises the states initialization (101), pre-operation (104), trial operation (107) and real-time operation (110) and state transitions (102, 103) between initialization and pre-operation, (105, 106) between pre-operation and trial operation and (108, 109) between trial operation and real-time operation, wherein the states initialization, pre-operation and trial operation and the state transition between initialization and pre-operation and the state transition between pre-operation and trial operation are assigned to a non-real-time context and the state real-time operation and the state transition between trial operation and real-time operation are assigned to a real-time context,
a module description (1) that contains module properties and a unique module identification, and
a functional-module interface (12) for accessing the finite state machine and the module description, wherein the functional module is configured to log on with its module identification during the state transition (102) from initialization to pre-operation and to log off during the state transition (103) from pre-operation to initialization,
to establish communication connections to further functional modules via the administration module during the state transition (105) from pre-operation to trial operation and to break down communication connections during the state transition (106) from trial operation to pre-operation, and
to log on to further functional modules during the state transition (108) from trial operation to real-time operation and to log off during the state transition (109) from real-time operation to trial operation.

10. The functional module according to claim 9, mapping at least one machine functionality.

11. The functional module according to claim 9 or 10, comprising at least one of the further elements: interface (13), interface indicator (14), parameter area (15), data area (16), data area indicator (17), time-context description area (18), configuration area (20) and reference counter (19).

12. The functional module according to claim 11, wherein the reference counter (19) monitors the life cycle of the functional module and is configured to raise the count value by 1 when logging on an interface and to reduce the count value by 1 when logging off an interface, wherein the functional module may delete itself autonomously at the count value 0.

13. A computer program product having program code means for executing the run-time system or the functional module according to any one of the preceding claims when the computer program product runs on a data-processing system or is stored on a computer-readable recording medium.

## Revendications

1. Système en temps réel pour installation de traitement de données, destiné à exécuter en temps réel un programme de commande d'installation sur base d'une description de programme de commande qui présente
plusieurs modules fonctionnels (1, 2) qui présentent tous une machine d'état (10) qui comporte les états d'initialisation (101), de pré-fonctionnement (104), de fonctionnement en vérification (107) et de fonctionnement en temps réel (110), et des transitions d'état (102, 103) entre l'initialisation et le pré-fonctionnement, (105, 106) entre le pré-fonctionnement et le fonctionnement en vérification et (108, 109) entre le fonctionnement en vérification et le fonctionnement en temps réel, les états d'initialisation, de pré-fonctionnement et de fonctionnement en vérification, la transition d'état entre l'initialisation et le pré-fonctionnement, la transition d'état entre le pré-fonctionnement et le fonctionnement en vérification étant associée à un contexte non en temps réel, l'état de fonctionnement en temps réel et la transition d'état entre le fonctionnement en vérification et le fonctionnement en temps réel étant associés à un contexte en temps réel,
une description (11) des modules qui contient les propriétés des modules et une caractérisation univoque des modules,
une interface (12) entre modules fonctionnels qui accède à la machine d'état et à la description des modules et
un module de gestion (3),
le module de gestion gérant le module fonctionnel sur la base de la description du programme de commande,
les modules fonctionnels s'annonçant par leur caractérisation de module au module de gestion lors de la transition d'état (102) entre l'initialisation et le pré-fonctionnement et se désannonçant lors de la transition d'état (103) entre le pré-fonctionnement et l'initialisation,
les modules fonctionnels établissant par l'intermédiaire du module de gestion des liaisons de communication avec d'autres modules fonctionnels lors de la transition d'état (105) entre le pré-fonctionnement et le fonctionnement en vérification et interrompant ces liaisons de communication lors de la transition d'état (106) entre le fonctionnement en vérification et le pré-fonctionnement et
les modules fonctionnels s'annonçant aux autres modules fonctionnels lors de la transition d'état (108) entre le fonctionnement en vérification et le fonctionnement en temps réel et se désannonçant lors de la transition d'état (109) entre le fonctionnement en temps réel et le fonctionnement en vérification.

2. Système en temps réel selon la revendication 1, dans lequel le module de gestion (3) est conçu pour former l'instance d'un module fonctionnel sur la base d'une description d'instance.

3. Système en temps réel selon les revendications 1 ou 2, dans lequel au moins un module fonctionnel est configuré comme module fonctionnel systémique (2) qui fournit un service de base du programme de commande d'installation.

4. Système en temps réel selon la revendication 3, dans lequel le service de base du module systémique est une commande en temps réel.

5. Système en temps réel selon l'une des revendications précédentes, dans lequel au moins un module fonctionnel est configuré comme module fonctionnel d'utilisateur (1) qui forme l'image d'au moins une fonctionnalité de la machine.

6. Système en temps réel selon la revendication 5, dans lequel au moins une autre machine d'état est sous-jacente à la machine d'état du module fonctionnel d'utilisateur (1) et peut être lancée lorsque la machine d'état du module fonctionnel d'utilisateur est à l'état de fonctionnement en temps réel.

7. Système en temps réel selon l'une des revendications précédentes, dans lequel les modules fonctionnels (1, 2) occupent des ressources du système de traitement de données lors de la transition d'état (102) entre l'initialisation et le pré-fonctionnement et libèrent les ressources occupées du système de traitement de données lors de la transition d'état (103) entre le pré-fonctionnement et l'initialisation.

8. Système en temps réel selon l'une des revendications précédentes, dans lequel les modules fonctionnels (1, 2) occupent des ressources d'autres modules fonctionnels lors de la transition d'état (108) entre le fonctionnement en vérification et le fonctionnement en temps réel et libèrent les ressources occupées des autres modules fonctionnels lors de la transition d'état (109) entre le fonctionnement en temps réel et le fonctionnement en vérification.

9. Module fonctionnel (1, 2) destiné à être utilisé dans un système en temps réel qui comprend
un module de gestion (3) doté d'une interface de module de gestion d'installation de traitement de données en vue de l'exécution en temps réel d'un programme de commande d'installation à l'aide d'une machine d'état (10) qui présente les états d'initialisation (101), de pré-fonctionnement (104), de fonctionnement en vérification (107) et de fonctionnement en temps réel (110) et des transitions d'état (102, 103) entre l'initialisation et le pré-fonctionnement, (105, 106) entre le pré-fonctionnement et le fonctionnement en vérification et (108, 109) entre le fonctionnement en vérification et le fonctionnement en temps réel, les états d'initialisation, de pré-fonctionnement et de fonctionnement en vérification et la transition d'état entre l'initialisation et le pré-fonctionnement et la transition d'état entre le pré-fonctionnement et le fonctionnement en vérification étant associés à un contexte non en temps réel, l'état de fonctionnement en temps réel et la transition d'état entre le fonctionnement en vérification et le fonctionnement en temps réel étant associés à un contexte en temps réel,
une description (1) des modules qui contient les propriétés des modules et une caractérisation univoque des modules et
une interface (12) entre modules fonctionnels qui accède à la machine d'état et à la description des modules,
le module fonctionnel étant conçu pour s'annoncer par sa caractérisation de module lors de la transition d'état (102) entre l'initialisation et le pré-fonctionnement et pour se désannoncer lors de la transition d'état (103) entre le pré-fonctionnement et l'initialisation,
pour établir par l'intermédiaire du module de gestion des liaisons de communication avec d'autres modules fonctionnels lors de la transition d'état (105) entre le pré-fonctionnement et le fonctionnement en vérification et pour interrompre les liaisons de communication lors de la transition d'état (106) entre le fonctionnement en vérification et le pré-fonctionnement et
pour s'annoncer aux autres modules fonctionnels lors de la transition d'état (108) entre le fonctionnement en vérification et le fonctionnement en temps réel et pour se désannoncer lors de la transition d'état (109) entre le fonctionnement en temps réel et le fonctionnement en vérification.

10. Module fonctionnel selon la revendication 9, qui forme l'image d'au moins une fonctionnalité de la machine.

11. Module fonctionnel selon les revendications 9 ou 10, contenant au moins l'un des autres éléments : interface (13), indicateur d'interface (14), plage de paramètres (15), plage de données (16), indicateur de plage de données (17), plage de descriptions de contexte temporel (18), plage de configuration (20) et compteur de référence (19).

12. Module fonctionnel selon la revendication 11, dans lequel le compteur de référence (19) surveille la durée de vie du module fonctionnel et est conçu pour augmenter de 1 la valeur du compteur lors de l'annonce d'une interface et d'abaisser de 1 la valeur du compteur lors de la désannonce d'une interface, le module fonctionnel pouvant s'effacer automatiquement lorsque le compteur est à la valeur 0.

13. Produit de programme informatique doté de moyens de code de programme permettant d'exécuter le système en temps réel ou la module fonctionnel selon l'une des revendications précédentes lorsque le produit de programme informatique est exécuté sur une installation de traitement de données ou est conservé sur un support d'affichage lisible par ordinateur.
